# EUROPÄISCHE PATENTSCHRIFT

(11) **EP 0 375 622 B1**
(45) Veröffentlichungstag und Bekanntmachung des Hinweises auf die Patenterteilung: **07.07.1993**
(21) Anmeldenummer: 89810963.2
(22) Anmeldetag: 15.12.1989
(51) Int. Cl.: G01B 21/00, G01D 5/24, G01B 3/22

(54) **Messanordnung umfassend zumindest einen linearen elektronischen Längenmesstaster**
Measuring array comprising at least one linear electronic length-measuring probe
Appareil de mesure comportant au moins un capteur électronique linéaire de mesure de longueur

(30) Priorität: 21.12.1988 CH 4729/88
(43) Veröffentlichungstag der Anmeldung: 27.06.1990
(73) Patentinhaber: Weber, Hans Rudolf, CH-1007 Lausanne (CH)
(72) Erfinder: Weber, Hans Rudolf, CH-1007 Lausanne (CH)
(74) Vertreter: White, William

(56) Entgegenhaltungen:
- EP-A- 0 107 338
- WO-A-82/01064
- DE-A- 3 211 118
- DE-A- 3 719 731
- DE-U- 8 530 898
- FR-A- 2 509 851
- GB-A- 2 097 536
- GB-A- 2 172 707
- US-A- 3 566 221
- US-A- 4 490 913
- ISO-Norm R 463, DIN 870, Norme française, NF E 11-050

## Beschreibung

Die vorliegende Erfindung betrifft eine Messanordnung gemäss dem Oberbegriff des Patentanspruchs 1.

Messanordnungen mit linearen elektronischen Längenmesstastern sind in der Metrologie bekannt und werden für absolute oder komparative Messungen von linearen Grössen, beispielsweise Dimensionen oder Verschiebungen, verwendet. Dabei kommen je nach Anwendungsfall und/oder Anforderungen an die Ableseleichtigkeit des Messergebnisses analoge und/oder digitale Anzeigen und unterschiedlich konstruierte Längenmesstaster zur Anwendung. Bei herkömmlichen Längenmesstastern ist ein üblicherweise elektronisch ablesbares Messglied eingebaut, das durch eine lineare Verschiebung des Messbolzens eine definierte Aenderung einer induktiven, kapazitiven, magnetischen, optischen oder anderen Messgrösse bewirkt. Derartige Längenmesstaster sind mittels elektrischen Kabeln mit einer extern angeordneten, normalerweise in einer Anzeigeeinheit untergebrachten Elektronikschaltung verbunden, die eine adäquate Signalaufbereitung und -umwandlung in digital anzeigbare und auswertbare Signale besorgt. Ein derartiger Meßtaster ist in der FR-A-2 509 851 Offenbart. Da die in den Längenmesstastern erzeugten Signale keiner einheitlichen Norm, beispielsweise den in der Datenverarbeitung üblichen RS-232- oder RS 485-Normen, entsprechen, können in der Regel nur die zu einem Mess- und Anzeigegerät passenden Längenmesstaster verwendet werden und die Uebertragung der Messwerte auf einen standardisierten Drucker, Rechner oder ein anderes standardisiertes Auswertgerät kann nur erfolgen, nachdem die Signale in einer Anpasselektronik (Interface) formatiert worden sind. Durch diese Tatsache sind quasi alle heute auf dem Markt erhältlichen Längenmesstaster untereinander inkompatibel. Dies führt zu einer einseitigen Bindung an einen einmal gewählten Lieferanten und Mess- und Anzeigegerätetyp. Mit Blick auf die fortschrittliche Computerindustrie und die Anstrengungen zur Normierung von Schnittstellen entspricht dies einer Situation, die überwunden werden muss.

Die auf dem Markt unter verschiedenen Namen und mit unterschiedlichen Konstruktionen erhältlichen elektronischen Messuhren mit integrierten Längenmesstastern und digitalen Anzeigen sind keine Lösung für dieses Problem, sondern stellen lediglich Verbindungen von Längenmesstaster und Anzeigeeinheit mit zugehöriger Elektronikschaltung in einem Gehäuse dar. Es sind relativ voluminöse Messinstrumente, deren Einsatzmöglichkeiten beschränkt sind und die keinerlei normalisierte digitale Signalausgänge aufweisen, die ihre Verwendung mit standardisierten Auswertgeräten ermöglichen würden. Sie eignen sich in der Regel nicht für die Prozesskontrolle und die Verwendung in Mehrstellen-Messanordnungen .

Bei Mehrstellen-Messanordnungen sowie in der Prozesskontrolle liegen Messtaster und Anzeigeinstrument räumlich oft weit auseinander und müssen durch Kabel miteinander verbunden werden. Die Kabellänge zwischen Messtaster und Anzeigeinstrument zur Uebertragung der bei den vorerwähnten Längenmesstastern erzeugten analogen Signale ist auf einige Meter begrenzt, da sonst der Messwert verfälscht und die Anfälligkeit auf elektromagnetische und elektrostatische Störungen unzulässig hoch wird.

Wenn die Längenmesstaster, wie dies in vielen Anwendungsfällen von Vorteil ist, ferngesteuert eingefahren werden sollen, bedingt dies die Verbindung des Längenmesstasters mit einer zusätzlichen Leitung, beispielsweise einer pneumatischen Leitung. Dies ist in vielen Fällen nachteilig, erhöht die Störanfälligkeit und erschwert besonders bei Mehrstellen-Messanordnungen die Installation der Längenmesstaster. Weiter ist zu bemängeln, dass die bekannten linearen elektronischen Längenmesstaster ohne Verbindungskabel und externe Elektronik und Anzeige nicht verwendet werden können. Die Einrichtung von Messplätzen ist daher aufwendig und kompliziert, insbesondere dann, wenn das Mess- und Anzeigegerät in einiger Entfernung vom Messplatz aufgestellt ist und die einzelnen Längenmesstaster, resp. deren Wertangaben geeicht werden müssen, und beim Messplatz keine Anzeige verfügbar ist.

Der vorliegenden Erfindung liegt die Aufgabe zugrunde, eine Messanordnung, umfassend zumindest einen linearen elektronischen Längenmesstaster und optional eine kabellos damit verbindbare Anzeige- und Kontrolleinheit, zu schaffen, die die Nachteile der bekannten Anordnungen dieser Art und deren Komponenten nicht aufweist und insbesondere bezüglich ihrer Handhabung und ihrer Einsatzmöglichkeiten Vorteile gegenüber den bekannten Messanordnungen mit linearen elektronischen Längenmesstastern aufweist. Insbesondere soll sie den Aufbau und Betrieb von Mehrstellen-Messanordnungen vereinfachen, eine Kompatibilität mit Auswerteinheiten unterschiedlicher Fabrikate schaffen, die zulässigen Kabellängen um ein Vielfaches erhöhen, bei Bedarf einen kabellosen Betrieb mit Anzeige und Kontrolle am Ort der Messstelle ermöglichen und die Fernsteuerung der Tasterspindel oder des Messbolzens ohne zusätzliche Kabel oder Schläuche bewerkstelligen. Weiter soll die erfindungsgemässe Messanordnung die Möglichkeit schaffen, einen mittels Verbindungskabel mit einer aussenliegenden Auswerteinheit verbundenen Längenmesstaster temporär ohne Unterbrechung der Verbindung zur externen Auswerteinheit direkt und an Ort mit einer Anzeige- und Kontrolleinheit zu verbinden.

Erfindungsgemäss wird diese Aufgabe durch eine Messanordnung gelöst, wie sie im Patentanspruch 1 definiert ist.

Vorteilhafte Ausführungsvarianten des Erfindungsgegenstandes und seiner Komponenten entnimmt man den abhängigen Ansprüchen. Sie werden hiernach unter Bezugnahme auf die Zeichnung beschrieben. In letzterer zeigt
Fig. 1 eine Ansicht eines Längenmesstasters, wie er vorteilhafterweise in einer erfindungsgemässen Messanordnung verwendet wird, die
Fig. 2a, 2b und 2c den Längenmesstaster nach Fig. 1 mit unterschiedlich gestalteten direkt darauf aufgesetzten Anzeige- und Kontrolleinheiten,
Fig. 3 eine erfindungsgemässe Messanordnung mit drei Längenmesstastern und unterschiedlichen damit verbundenen Anzeige- und Kontrolleinheiten und Auswerteinheiten, die
Fig. 4a, 4b, 4c und 4d vorteilhafte Ausführungsvarianten unterschiedlicher zirkularer Anzeigen mit Digitalfeldern für Anzeige- und Kontrolleinheiten, wie sie in der erfindungsgemässen Messanordnung verwendet werden können,
Fig. 5 eine Anzeige mit linearer Skala und Digitalfenster,
Fig. 6 ein Detail aus dem rückwärtigen Endbereich des Längenmesstasters in vielfacher Vergrösserung, teilweise geschnitten,
Fig. 7 ein teilweise geschnittenes kapazitives Messglied in perspektivischer Ansicht, wie es im Längenmesstaster nach Fig. 1 und 8 vorteilhafterweise zur Anwendung kommt, und
Fig. 8 einen partiellen Längsschnitt durch den Längenmesstaster nach Fig. 1.

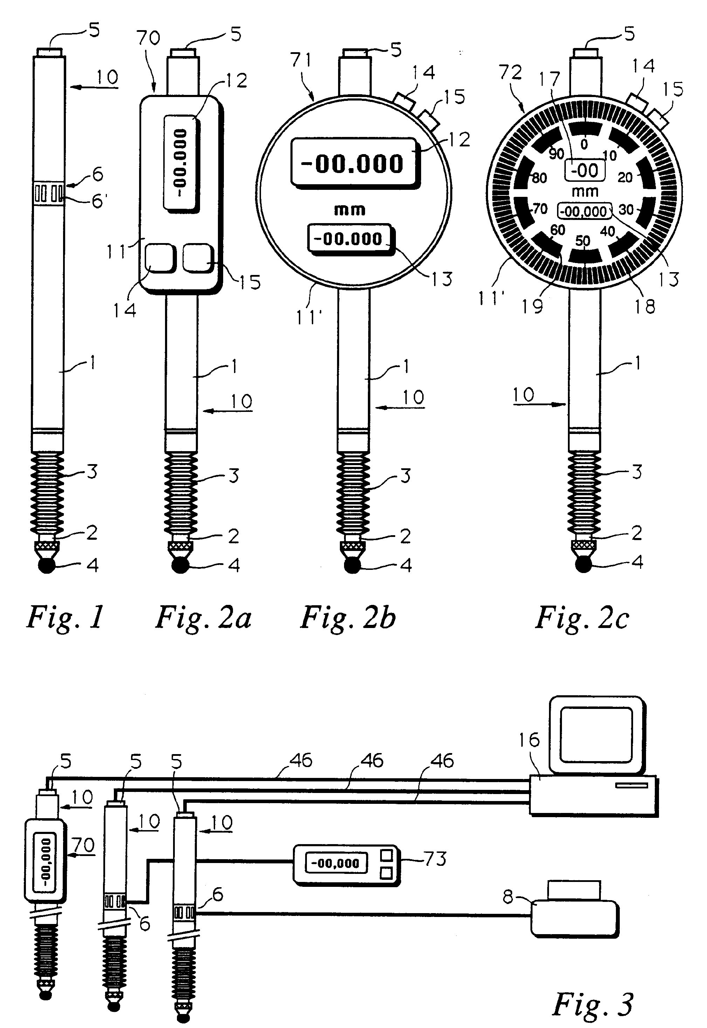

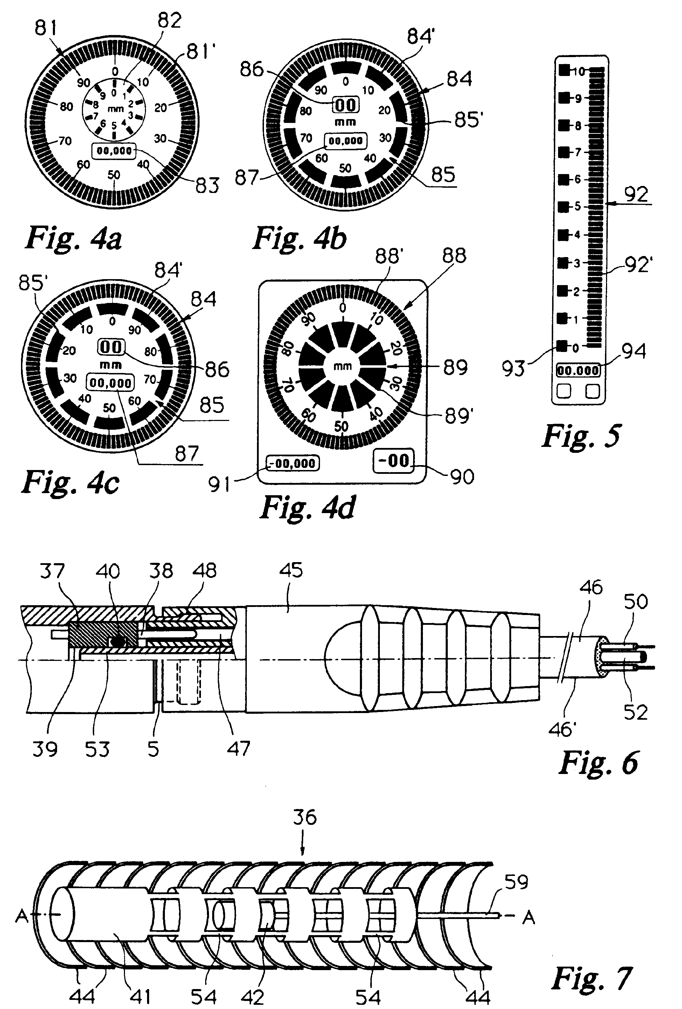

Fig. 1 stellt einen linearen Längenmesstaster 10 dar, der äusserlich betrachtet im wesentlichen aus einem Zylinder 1, einem bezüglich diesem linear verschiebbaren Messbolzen 2, einem Faltenbalg 3 und einer Tasterspitze 4 besteht. Der Zylinder 1 weist einen Aussendurchmesser auf, der einem branchenüblichen und normalisierten Spannschaftdurchmesser, vorzugsweise 8 mm, wie er beispielsweise in den ISO- und DIN-Normen R 463 resp. 879 und der Norme Française NF E 11-050 definiert ist, entspricht. In ihm sind unter anderem die Lagerung des Messbolzens 2 und die weiter unten beschriebenen Komponenten eines Messwertgebers sowie eine Elektronikschaltung untergebracht, die die vom Messwertgeber erzeugten, in der Regel analogen Signale aufbereitet und in normalisierte, vorteilhafterweise digitale Signale umwandelt. An seinem hinteren Ende weist der Längenmesstaster 10 einen Datenausgang 5, vorteilhafterweise in Form eines Steckers, auf, wie er nachfolgend anhand von Fig. 6 beschrieben wird, mittels welchem er gemäss Fig. 3 über ein Verbindungskabel 46 mit einem Auswertgerät 16 verbindbar ist. Weiter ist der Längenmesstaster 10 vorteilhafterweise mit einer Kontaktzone 6 versehen, deren einzelne Kontaktbereiche 6' mit Anschlüssen der erwähnten Elektronikschaltung oder gegebenenfalls mit den Kontaktstiften des Steckers 5 verbunden sind. Die Kontaktzone 6 dient insbesondere dazu, eine Anzeige- und Kontrolleinheit 70, 71 oder 72 kabellos mit dem Längenmesstaster 10 zu verbinden, wie weiter unten anhand von Fig. 3 beschrieben ist. Gegebenenfalls kann der Längenmesstaster 10 auch fest mit einer Anzeige- und Kontrolleinheit 70, 71 oder 72 versehen sein, was die Kontaktzone 6 überflüssig macht, da in diesem Falle keine lösbare elektrische Verbindung zwischen Längenmesstaster 10 und Anzeige- und Kontrolleinheit 70, 71, oder 72 notwendig ist.

Der Messbolzen 2, auch Pinole oder Tasterspindel genannt, ist vorteilhafterweise spielfrei im Zylinder 1 gelagert und wird durch den Faltenbalg 3, der ihn vorteilhafterweise gasdicht umfasst, vor Verschmutzung geschützt. Es kann für viele Anwendungsfälle des Längenmesstasters 10 angezeigt sein, den Messbolzen 2 in der Ruhestellung durch die Kraft einer Druckfeder aus dem Zylinder 1 herauszudrücken, derart, dass der Messbolzen 2, resp, die an seinem vorderen Ende vorteilhafterweise auswechselbar damit verbundene Tasterspitze 4 nach aufgezwungener Einzugsbewegung und Wiederfreigabe mit einer definierten Messkraft auf einen auszumessenden Messpunkt aufsetzt.

Aus den Fig. 2a, 2b und 2c erkennt man den Längenmesstaster 10 nach Fig. 1 mit unterschiedlich ausgebildeten darauf aufgesetzten Anzeige- und Kontrolleinheiten 70, 71 und 72. Die Gehäuse 11 und 11' derselben sind vorteilhafterweise so ausgebildet, dass sie auf den Längenmesstaster 10 aufgesetzt werden können, ohne eine eventuelle Kabelverbindung des Längenmesstasters 10 mit einer Auswerteinheit unterbrechen zu müssen. In den Gehäusen 11 und 11' ist eine weitere Kontaktzone vorgesehen, deren Kontaktbereiche in vorgegebener Art und Weise mit jenen des Längenmesstasters 10 in Kontakt treten. Dies kann wahlweise dadurch erreicht werden, dass die Anzeige- und Kontrolleinheiten 70, 71 oder 72 in vorgegebener Ausrichtung auf den Längenmesstaster 10 aufgesteckt werden, oder aber die Kontaktbereiche 6' der Kontaktzone 6 des Längenmesstasters 1 in Form von nebeneinander liegenden Ringen rund um den Zylinder 1 laufen und mit entsprechenden Kontaktbereichen an der Anzeige- und Kontrolleinheit 70, 71 oder 72 in Kontakt gebracht werden. Dadurch kann erreicht werden, dass sich die Anzeige- und Kontrolleinheit 70, 71 oder 72 um den Längenmesstaster 10 herum beliebig drehen lässt. Die konstruktiven Mittel, derer es bedarf, um die Kontaktbereiche 6' am Zylinder 1 mit den zugeordneten Kontaktbereichen an der Anzeige- und Kontrolleinheit 70, 71 oder 72 in eine vorbestimmte Verbindung zu bringen sind vielfältig und dem Fachmann geläufig, derart, dass hier nicht weiter darauf eingegangen wird.

In einer anderen, hier nicht illustrierten Ausführungsvariante kann die Anzeige- und Kontrolleinheit durch das Herabfahren über den Längenmesstaster 10 mittels einem in einer Längsbohrung integrierten Gegenstecker in Kontakt mit dem Stecker am Datenausgang 5 gebracht werden. In diesem Falle ist es vorteilhaft, wenn die Anzeige- und Kontrolleinheit ihrerseits einen Zusatzstecker aufweist, dessen Anschlüsse mit jenen im Stecker des Längenmesstasters 10 übereinstimmen.

Unabhängig davon, wie und wo die Anzeige- Kontrolleinheit 70 mit dem Längenmesstaster 10 verbunden wird, ist wesentlich, dass sie elektrisch mit der Elektronikschaltung im Zylinder 1 verbunden wird. Wie bei digitalen Anzeige- und Kontrolleinheiten üblich, ist die zusammen mit dem Längenmesstaster 10 verbindbare Anzeige- Kontrolleinheit 70 vorteilhafterweise mit Druckknöpfen oder ähnlichen Betätigungselementen 14 und 15 verbunden, mittels welchen sich beispielsweise die Anzeige 12 auf Null setzen, von Millimetermassen auf Zollmasse umstellen und in ihrer Anzeigeskala verstellen sowie ein- und ausschalten lässt. Da die Elektronik der Anzeige- Kontrolleinheit 70 nicht Gegenstand der vorliegenden Erfindung ist und sie die von der vorerwähnten Elektronikschaltung im Längenmesstaster 10 erzeugten Signale in bekannter Art und Weise in Anzeigewerte umsetzt, wird hiernach nicht weiter auf deren Einzelheiten eingegangen.

Die Fig. 2a, 2b und 2c illustrieren drei unterschiedliche Ausführungsvarianten von vorteilhaften Anzeige- und Kontrolleinheiten-Typen. Sie unterscheiden sich nicht nur durch ihre unterschiedlichen Gehäuseformen, sondern auch durch ihre unterschiedlich ausgelegten Anzeigemittel voneinander. Die in Fig. 2a dargestellte Anzeige- und Kontrolleinheit 70 weist ein rechteckiges Gehäuse 11 auf und ist mit einer einzigen digitalen Anzeige 12 versehen, mittels welcher die Messwerte des Längenmesstasters 10 anzeigbar sind. Die Anzeige- und Kontrolleinheit 71 gemäss Fig. 2b weist ein rundes Gehäuse 11' und zwei unabhängig voneinander arbeitende digitale Anzeigen 12 und 13 auf. Die Anzeige 12 beispielsweise, kann, wie die Anzeige 12 der Anzeige- und Kontrolleinheit 70 nach Fig. 2a, den vom Längenmesstaster 10 von einem absoluten Nullpunkt aus ermittelten Messwert anzeigen, wogegen die Anzeige 13 beispielsweise die Abweichung von einem vorbestimmten Sollwert anzeigen kann. Die beiden Anzeigen können einen Messwert auch gleichzeitig in unterschiedlichen Mass-Systemen (z.B. mm und inch) oder andere zu bestimmende Werte anzeigen. Die Anzeige- und Kontrolleinheit 72 gemäss Fig. 2c steht stellvertretend für kombinierte Digital-/Analog-Einheiten mit rundem Gehäuse 11'. Ein oder zwei digitale Anzeigen 13 und 17 können dabei wiederum der Anzeige unterschiedlicher Werte oder unterschiedlicher Messwertbereiche dienen. Parallel dazu kann, resp. können ein oder zwei Analoganzeige-Bereiche 18 und 19 den oder die Messwerte in analoger Form darstellen, wie dies hiernach anhand der Fig. 4a bis 4d beschrieben ist.

Fig. 3 illustriert schematisch eine erfindungsgemässe Messanordnung mit drei Längenmesstastern 10, die alle über Verbindungskabel 46, dessen vorteilhafter Aufbau anhand von Fig. 6 erläutert ist, mit einem Auswertgerät 16, beispielsweise in Form eines Rechners, verbunden sind. Ein Längenmesstaster 10 ist weiter verbindungskabellos mit einer Anzeige- und Kontrolleinheit 70 verbunden, wogegen ein anderer Längenmesstaster 10 über ein zusätzliches Verbindungskabel mit einer Fernanzeige 73 verbunden ist, die beispielsweise mit der Anzeige- und Kontrolleinheit 70 identisch sein kann, aber nicht muss. Der dritte Längenmesstaster 10 in der dargestellten Messanordnung ist zusätzlich zum Auswertgerät 16 mit einem Drucker 8 verbunden. Es versteht sich von selbst, dass die beschriebene und illustrierte erfindungsgemässe Messanordnung in keiner Art und Weise limitativen Charakter hat und beliebige andere Kombinationen von Komponenten sowie die Verbindung der Längenmesstaster 10 mit weiteren Komponenten, möglich ist.

In den Fig. 4a, 4b, 4c und 4d sind vorteilhafte Anzeigeskalen dargestellt, wie sie beispielsweise in einer Anzeige- und Kontrolleinheit 72 gemäss Fig. 2c verwendet werden können. Es handelt sich dabei vorteilhafterweise um Flüssigkristall-, Plasma- oder andere Anzeigen, wie sie heute in vielen Applikationen gebräuchlich sind. Die Anzeige gemäss Fig. 4a ist weitgehend einer analogen Messuhr nachgebildet und weist wie diese eine äussere rundum laufende Skala 81 auf, deren Teilung anders als hier gezeigt sein kann. Anstelle eines rundum laufenden Zeigers können die einzelnen Segmente 81' der Skala 81 in einem "Zeigermodus" an- und abgeschaltet, oder in einem "Füllmodus" nach und nach zugeschaltet werden. Im zentralen Bereich der Anzeige ist eine zweite Skala 82 angeordnet, die vorteilhafterweise die Anzahl Umdrehungen des imaginären Zeigers, resp. Durchläufe des An- und Abschaltens der Segmente 81' durch Anschalten entsprechender Skalenstriche oder Felder anzeigt. In der illustrierten Ausführungsvariante lassen sich Messwerte in Millimetern und 1/100 Millimetern darstellen. Neben der Skala 82 ist im zentralen Bereich dieser Anzeige vorteilhafterweise ein Fenster mit einer digitalen Anzeige 83 vorgesehen, die entweder den mittels den Skalen 81 und 82 analog dargestellten Messwert digital anzeigen oder aber einen zweiten, beliebig definierbaren Messwert anzeigen kann.

Die Anzeigen gemäss den Fig. 4b und 4c entsprechen jener der Anzeige- und Kontrolleinheit 72 nach Fig. 2c, wobei die Anzeige nach Fig. 4b für eine Messwertzunahme im Uhrzeigersinn und die Anzeige nach Fig. 4c für eine Messwertzunahme im Gegenuhrzeigersinn ausgelegt ist. Sie weisen je eine äussere Skala 84 auf, bei der jeder Teilstrich 84' vorteilhafterweise einem 1/1000 Millimeter entspricht. Eine innere Skala 85 mit z.B. zehn Segmenten 85' zählt die 1/10 Millimeter und eine erste digitale Anzeige 86 zeigt die Millimeter des durch den mit der Anzeige- und Kontrolleinheit, in welcher die Anzeige integriert ist, verbundenen Längenmesstasters gemessenen Wertes an. Eine zweite digitale Anzeige 87 kann der Anzeige eines beliebigen zweiten Messwertes dienen. Sofern die Wertangaben "10 ... 90" für die Segmente 85' nicht fest gedruckt, sondern ebenfalls als ansteuerbare Anzeigen ausgelegt sind, kann eine einzige Anzeige lediglich mittels Umschaltung der Bereichswerte "10 ... 90" sowohl als links herum als auch als rechts herum laufende Messuhr verwendet werden. Es ist dabei selbstverständlich, dass die hiervor anhand der Fig. 4a beschriebenen Betriebsarten der Skalen auch in diesen Anzeigen verwendet werden können.

Die in Fig. 4d dargestellte Anzeige ist für ein rechteckiges Anzeige- und Kontrolleinheits-Gehäuse vorgesehen und weist zwei Skalen 88 und 89 auf, mittels denen Millimeter und 1/100 Millimeter analog in den vorbeschriebenen Anzeigemodi darstellbar sind. Alternativ können auch die 1/1000 Millimeter und 1/10 Millimeter dargestellt werden. Eine erste Digitalanzeige 90 kann im erwähnten Alternativ-Fall beispielsweise die Millimeter anzeigen. Eine zweite Digitalanzeige 91 kann der Anzeige eines beliebigen zweiten Messwertes dienen. Da eine derartige rechteckige Anzeige insbesondere in den oberen Eckbereichen unbenützte Anzeigeflächen aufweist, können dort weitere Anzeigen wie beispielsweise Richtungspfeile für die Darstellung der letzten inkrementalen Bewegungsrichtung des Messbolzens des Längenmesstasters oder von Toleranzüberschreitungen oder von anderen im Zusammenhang mit der Messung zweckmässigen Informationen vorgesehen werden.

Bei den illustrierten und beschriebenen Anzeigen sowie bei beliebigen anderen können bei Bedarf die Skalenbeschriftungen messrichtungs- oder vorzeichenabhängig oder in Abhängigkeit der Auflösung gesteuert werden. Vorzeichen, Toleranzüber- oder -unterschreitungen und andere Kriterien können durch verschiedene Farben der Skalen oder des Hintergrundes oder durch dafür vorgesehene Felder dargestellt werden.

Eine weitere vorteilhafte Anzeigeskala, die sich gut für die Verwendung in der erfindungsgemässen Messanordnung, insbesondere bei Mehrstellen-Messanordnungen eignet, ist in Fig. 5 dargestellt. Es handelt sich dabei im wesentlichen um eine Säulen-Anzeige, bei der eine Skala 92 mit senkrecht übereinander angeordneten Segmenten 92', von denen hier aus Darstellungsgründen nur jedes zweite dargestellt ist, die Darstellung des Messwertes, resp. dessen Veränderungen in Form einer zunehmenden oder abnehmenden Säule ermöglicht. Die den Segmenten 92' übergeordneten Messwerte können in Form von Flächen 93 progressiv zu- und abgeschaltet werden. Auf einer separaten digitalen Anzeige 94 lässt sich der analog angezeigte Wert oder ein beliebiger anderer Messwert digital anzeigen. Selbstverständlich sind weitere Varianten von Anzeigen und Skalenauslegungen möglich, beispielsweise Kombinationen von zwei Zeigern, wie sie bei der Zeitmessung üblich sind, und andere Varianten. Ebenso ist ein motorischer Antrieb eines oder mehrerer Zeiger denkbar.

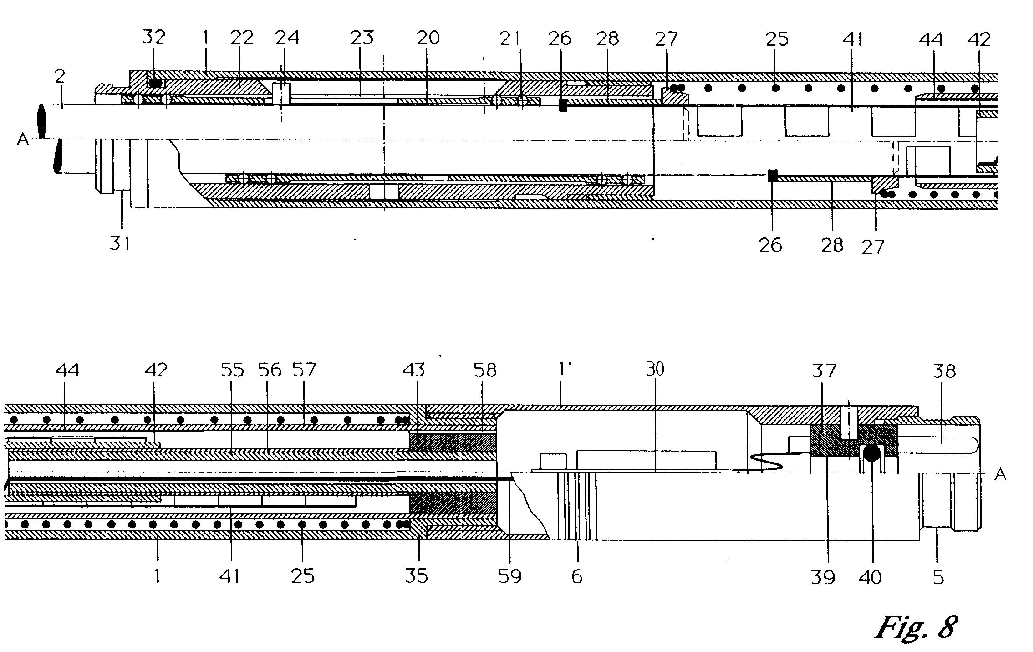

Die Fig. 8 zeigt einen partiellen Längsschnitt einer vorteilhaften Ausführungsvariante eines Längenmesstasters 10. Der Messbolzen 2 mit den damit verbundenen beweglichen Teilen ist bezüglich der Taster-Längsachse A-A in der oberen Schnitthälfte ganz ausgefahren und in der unteren Schnitthälfte ganz eingefahren dargestellt. Um eine leichtgängige, radialspielfreie und auf radial einwirkende Kräfte weitgehend unempfindliche Führung zu erhalten, ist der Messbolzen 2 im Zylinder 1 vorteilhafterweise mittels einer Kugel-Längsführung gelagert, die wie bekannt, im wesentlichen aus einem Kugelkäfig 20, Kugeln 21 und einer Lagerhülse 22 besteht. Ein mit dem Messbolzen 2 verbundener Stift 24 läuft in einem Längsschlitz 23 in der Lagerhülse und dient gleichzeitig als Drehschutz und als Wegbegrenzung für die Bewegung des Messbolzens 2 entlang der Achse A-A. Eine Rille 31 am vorderen Ende der Lagerhülse 22 dient zur Aufnahme des in dieser Figur nicht dargestellten Faltenbalges 3. Ein Dichtungsring 32 dient zur hermetischen Abdichtung von Lagerhülse 22 und Zylinder 1.

In der hier dargestellten Ausführungsvariante eines vorteilhaften Längenmesstasters 10 ist dieser mit einer Druckfeder 25 versehen, die sich messbolzenseitig auf einen mittels eines Federringes 26 und einer Distanzhülse 28 positionierten Ring 27 abstützt. An ihrem anderen Ende stützt sie sich auf einer Verengung 35 des Zylinders 1 ab. Durch die Kraft der Druckfeder 25 wird der Messbolzen 2 im Ruhezustand des Längenmesstasters 10 axial bis zum Anschlag des Verdrehschutzbolzens 24 am äusseren Ende des Längsschlitzes 23 aus dem Zylinder 1 herausgedrückt. Die Messkraft ändert entsprechend der Federkonstante über den gesamten Spindelhub. Da diese jedoch für viele Anwendungen möglichst konstant sein sollte, muss eine Druckfeder 25 mit kleiner Federkonstante gewählt oder die Messkraft auf andere Weise erzeugt werden, wie weiter unten beschrieben ist.

An die Längsführung des Messbolzens 2 anschliessend ist ein Messwertgeber 36 gemäss Fig. 7 untergebracht, der die axialen Bewegungen oder Positionen des Messbolzens 2 in elektrische Messwertsignale umsetzt, die durch die Elektronikschaltung 30 einerseits in normierte, vorteilhafterweise digitale Signale umgesetzt werden, die in einer unabhängigen Apparatur, beispielsweise einem Auswertgerät 16, in Anzeigewerte umgesetzt oder sonstwie weiterverarbeitet werden können und vorteilhafterweise andererseits so verarbeitet werden, dass die Messwerte durch die Anzeige- und Kontrolleinheit 70 anzeigbar sind. In den Zylinderteil 1' ist hinter der Elektronikschaltung 30 am Datenausgang 5 ein Stecker eingesetzt, an dem die normalisierten, vorteilhafterweise digitalen Signale abgenommen werden können. Der Stecker besteht im wesentlichen aus einem Isolierkörper 37, in den Kontaktstifte 38 auf bekannte Weise eingesetzt sind. Er enhält ausserdem eine Bohrung 39 und einen Dichtungsring 40.

Der Messbolzen 2 trägt an seinem hinteren Ende einen Schirm 41 als bewegliche Komponente des Messwertgebers gemäss Fig. 7. Innerhalb dieses axial mit dem Messbolzen 2 beweglichen Schirmes 41 ist eine zylindrische Aufnehmerelektrode 42 koaxial angeordnet und mittels eines Rohres 55 und einer darüberliegenden Isolierung 56 festgehalten. Das Rohr 55 ist über ein Zentrierteil 43 mit einer äusseren Hülse 57 des Messwertgebers koaxial fixiert. Die Hülse 57 trägt in ihrem inneren Durchmesser Gitterelektroden 44 des Messwertgebers, welche durch einen Schlitz 58 hindurch mit der Elektronikschaltung 30 verbunden sind. Die zentral angeordnete, hochempfindliche Aufnehmerelektrode 42 ist über eine Leitung 59 durch das Rohr 55 hindurch und durch dieses abgeschirmt mit der Elektronikschaltung 30 verbunden.

Fig. 6 illustriert die Verbindung des Längenmesstasters 10, resp. dessen mit dem Datenausgang 5 verbundenen Stecker mit einem Kabel 46 mittels eines Kabelsteckers 45. Im teilweisen Schnitt ist der Isolierkörper 37 mit seiner Bohrung 39, dem Dichtungsring 40 und mit einem der Kontakte 38 sichtbar. Der Kabelstecker 45 enthält eine Anzahl Kontakthülsen 47 zur Herstellung der elektrischen Kontakte mit den Stiften 38, sowie eine Leitung 52 für ein Druckmedium (Gas oder Flüssigkeit), deren Endstück 53 mittels des Dichtungsringes 40 mit der Bohrung 39 hermetisch verbindbar ist. Alternativ zu einer separaten Leitung 52 im Kabel 46 können Hohlräume innerhalb des Kabelmantels 46' der Druckübertragung dienen. In diesem Falle besorgt eine Dichtungslippe 48 die gasdichte Verbindung zwischen dem Stecker des Datenausgangs 5 und dem Kabelstecker 45. Innerhalb des Kabelmantels 46' können ausser den elektrischen Leitern 50 und der Druckleitung 52 auch Lichtleiter enthalten sein.

Durch Veränderung des Druckes des Druckmediums im Leiter 52 können Bewegung, Lage, Geschwindigkeit und Messkraft des Messbolzens 2 gesteuert werden. Bei Anlegen eines Vakuums wird der Messbolzen 2 durch die axiale Kraftkomponente des Atmosphärendruckes entgegen der Kraft der Druckfeder 25 an den inneren Anschlag gedrückt. Damit die Messkraft über den gesamten Messweg konstant bleibt, kann diese statt durch die Druckfeder 25 durch einen Ueberdruck in der Leitung 52 und damit im Zylinder 1 erzeugt werden. Statt die Messkraft durch Auswechseln der Druckfeder 25 zu verändern, wie es heute der Fall ist, kann diese einfach durch Regulieren des Ueberdruckes im Zylinder 1 den Bedürfnissen des Messproblems angepasst werden.

Fig. 7 illustriert in vergrössertem Massstab und schematisch einen vorteilhaften Aufbau des Messwertgebers 36 wie er im Längenmesstaster nach Fig. 8 verwendet wird und beschrieben ist. Um die in der Achse A-A angeordnete und feststehende und im wesentlichen zylindrische Aufnehmerelektrode 42 herum ist koaxial der rohrförmige Schirm 41 angeordnet, der vorteilhafterweise fest mit dem rückwärtigen Ende des Messbolzens 2 verbunden ist und sich demnach mit diesem entlang der Achse A-A verschiebt. Dieser Schirm 41, zumindest teilweise aus elektrisch leitendem Material hergestellt, weist abwechselnd volle und durchbrochene Bereiche auf, wobei letztere beispielsweise mittels über den Umfang verteilt angeordneten Stegen 54 überbrückt werden. Aussen um den Schirm 41 herum sind koaxial zylindrische Gitterelektroden 44, beispielsweise in Form von auf einem zylindrischen Substrat aufgebrachten Elektrodenflächen, angeordnet.

Der Fachmann erkennt, dass es sich bei dem hiervor beschriebenen Messwertgeber 36 um einen in seiner Wirkung und Funktion bekannten linearen kapazitiven Messwertgeber handelt, der allerdings in seiner Konstruktion wesentlich von den bekannten Elementen dieser Art abweicht, da er zylindrisch aufgebaut ist und dessen Wirkkomponenten koaxial angeordnet sind.

Durch eine wie hiervor beschrieben koaxiale Anordnung der Komponenten 41, 42 und 44 des Messwertgebers 36 ist das kapazitive Messelement perfekt gegen äussere Störsignale abgeschirmt. Die empfindliche Aufnehmerelektrode 42 befindet sich im Zentrum, rundum umgeben von den niederohmig angesteuerten Gitterelektroden 44. Eine koaxiale Anordnung der gesamten Längenmesstaster- und Messwertgeberelemente ermöglicht geringe radiale Abmessungen. Rotationssymmetrische Teile sind einfach, billig und mit hoher Genauigkeit herstellbar. Die Messung geschieht strikte nach dem Gesetz von Abbe.

Der Fachmann erkennt, dass anstelle des beschriebenen kapazitiven Messwertgebers 36 selbstverständlich auch andere lineare Messwertgeber verwendet werden können. Beispielsweise seien hier lediglich optische, induktive und magnetische Messwertgeber-Systeme aufgezählt. Bei der Verwendung von kapazitiven Messwertgebern kann ein System verwendet werden, das einen linearen und ebenen Massstab umfasst, der als passiver Reflektor wirkt. Auch die Verwendung eines ebenen Massstabes in Form eines elektrostatischen Schirmes zwischen ebenen Gitter- und Aufnehmerelektroden sowie die Verwendung eines Massstabes mit Teilungen von unterschiedlichem Dielektrikum sind möglich, ebenso die Integration von Elektroden und Elektronikschaltung auf ein und demselben Substrat. Zur Verminderung der Einbaumasse senkrecht zu der Messrichtung können die Gitterelektroden und eine oder mehrere Aufnehmerelektroden in einem Winkel, beispielsweise 90°, zueinander stehen.

Der hiervor beschriebene kapazitive Messwertgeber 36 kann vorteilhafterweise zylindrische Gitterelektroden 44 enthalten, die auf einer flexiblen gedruckten Schaltung, in die auch die Elektronikschaltung 30 oder Teile davon eingesetzt sind, planar hergestellt und anschliessend aufgerollt werden. Alternativ kann ein kapazitiver Messwertgeber mit koaxialer Struktur schraubenförmig aufgebaut sein, indem die Gitterelektroden schraubenförmig auf ein zylindrisches Substrat aufgebracht werden oder aus einer einlagigen Wicklung von mehreren parallelen Leitern bestehen. Entsprechend sind auch die elektrisch leitenden und isolierenden Zonen des elektrostatischen Schirmes schraubenförmig angeordnet. Dieser schraubenförmige Aufbau hat zur Folge, dass der Messwertgeber sowohl auf eine lineare Verschiebung des Schirmes als auch auf eine Rotation um seine Längsachse hin ein Ausgangssignal erzeugt und somit auch als Drehgeber oder als Kombination von Dreh- und Längenmessgeber verwendet werden kann.

Der Schirm 41 nach Fig. 7 kann aus einem zylindrischen Rohr aus elektrisch leitendem Material hergestellt sein, aus welchem die Durchbrüche herausgeätzt, gestanzt, mittels Laser herausgeschnitten oder auf andere dem Fachmann bekannte Art realisiert werden. Er kann aber auch planar hergestellt und nachträglich zu einem Zylinder aufgerollt oder in eine andere zweckentsprechende Form gebracht werden. Ebenso ist die Verwendung eines dielektrischen Substrates mit darauf angebrachten elektrisch leitenden Zonen denkbar.

Der hiervor anhand der Zeichnung beschriebene vorteilhafte Längenmesstaster 10 ist wie erwähnt am Datenausgang 5 vorteilhafterweise mit einem Stecker ausgerüstet, der sowohl die benötigten elektrischen Anschlüsse für das Herausführen der durch die Elektronikschaltung 30 erzeugten normierten Signale als auch einen Anschluss für die Steuerung der Messbolzenbewegungen umfasst. Vorteilhafterweise werden die Signale des Messwertgebers in der Elektronikschaltung 30 in digitale normierte Signale entsprechend der bei Rechnern, Druckern und anderen Auswerteinheiten üblichen RS-232 -Norm umgesetzt.Die Stromversorgung für die Elektronikschaltung 30 kann vorteilhafterweise über das Kabel 46 oder durch eine Batterie oder einen Akkumulator in der Anzeige- und Kontrolleinheit 70 erfolgen.

Der Fachmann erkennt, dass die erfindungsgemässe Messanordnung dank des neuen linearen Längenmesstasters 10 mit Ausgangssignalen in digitaler Standard-Norm und integrierten Kontakten für die direkte Verbindung mit einer Anzeige- und Kontrolleinheit unabhängig von Verbindungskabeln sowie der integrierten Auslegung von elektrischem und pneumatischem oder hydraulischem Anschluss gegenüber den heute gebräuchlichen Messanordnungen mit linearen Längenmesstastern wesentliche Vorteile bietet, die weit über die Tatsache hinausgehen, dass es dank der Erfindung erstmals möglich ist, einen linearen Längenmesstaster mit von aussen gesteuerter Bewegung des Messbolzens ohne zusätzliche Verbindungskabel und Pneumatik- oder Hydraulikschlauch für die Steuerung der Messbolzenbewegungen zu verwenden und eine Anzeige- und Kontrolleinheit dank der im Längenmesstaster integrierten Elektronik direkt aufgesetzt werden kann. Ein mit einer Anzeige- und Kontrolleinheit 70 bestückter Längenmesstaster gemäss der erfindungsgemässen Messanordnung ist demnach viel handlicher im Gebrauch und damit einfacher und vielfältiger einsetzbar als alle heute gebräuchlichen Längenmesstaster für die Verwendung mit digitalen Messwertanzeigen. Dank der Erfindung ist es auch erstmals möglich, einen elektronischen Längenmesstaster in Verbindung mit einer darauf aufsteckbaren Anzeige- und Kontrolleinheit direkt als Palpeur/Comparator zu verwenden, welche Anzeige- und Kontrolleinheit nach dem Einrichten des Messplatzes ohne Verlust der Eichwerte abgenommen und bei Bedarf jederzeit wieder aufgesteckt werden kann.

Die koaxiale Anordnung der Komponenten des Messwertgebers, resp. die Anordnung sämtlicher Komponenten eines nicht koaxialen Messwertgebers zusammen mit der die Messwertgeber-Signale verarbeitenden und in normalisierte Signale umsetzenden Elektronik in einem Zylinder mit einem Norm-Spannschaftdurchmesser sowie die Integration einer Pneumatik- oder Hydraulikleitung in einen elektrischen Ausgang für die Verbindung des Längenmesstasters mit einer Auswerteinheit eröffnen der erfindungsgemässen Messanordnung sowie ihren Komponenten, insbesondere dem Längenmesstaster, neue Anwendungsmöglichkeiten, die bisher aufgrund der den heute üblichen Längenmesstastern inherenten Nachteilen nicht möglich waren.

Bei absolut messenden Tastern wird nicht eine Verschiebung des Messbolzens 2 von einem Referenzpunkt aus gemessen, sondern jeder Lage des Messbolzens 2 gegenüber dem Zylinder 1 ist ein Messwert zugeordnet. Dieser bleibt auch nach Stromunterbrüchen erhalten, ohne dass dazu elektronische Speicher notwendig wären. Bei gewissen Anwendungen, beispielsweise bei Mehrstellen-Messanlagen, die mitunter stromlos gemacht, oder über längere Zeit nicht gebraucht werden, ist die Verwendung eines absolut messenden Tasters von Vorteil. Bei absolut messenden Tastern wird der ganze Messbereich in einer Interpolation erfasst. Die Elektronikschaltung 30 dient primär dazu, ein elektrisches Signal zu erzeugen, das in Relation steht zur relativen Lage des Messbolzens 2 gegenüber dem Zylinder 1, kann aber auch Teile enthalten, die zur Linearisierung der Kennlinie dienen. Sie besteht vorteilhafterweise aus einer oder mehreren integrierten Schaltungen und den nötigen diskreten Komponenten. Das elektrische Signal kann beispielsweise eine Spannung, ein Strom, eine Impedanz, eine Frequenz oder eine Impulsfolge sein, in normierter Form, so dass ein direkter Anschluss an gängige Instrumente und Geräte möglich ist.

Es ist selbstverständlich, dass der Zylinder 1 des Längenmesstasters 10 nicht auf seiner gesmaten Länge einen gleichmässig runden querschnitt aufweisen muss.

## Patentansprüche

1. Messanordnung enthaltend zumindest einen linearen elektronischen Längenmesstaster (10) mit einem äusseren Zylinder (1, 1'), einem ein- und ausfahrbaren Messbolzen (2) mit Tasterspitze (4) und einer mit zumindest einer Messwertanzeige (12) sowie Betätigungselementen (14, 15) verbindbare eingangsseitig mit dem Messwertgeber (36) verbundenen Elektronikschaltung (30), sowie im Zylinder (1, 1') eine Lagerung (20, 21, 22) für den Messbolzen (2), einen linearen Messwertgeber (36) für die Erzeugung von Messwert-Signalen und einen elektrischen Datenausgang (5), dadurch gekennzeichnet, dass die Elektronikschaltung (30) in dem genannten Zylinder (1, 1') des Längenmesstasters (10) mit normiertem Aussendurchmesser untergebracht und so ausgelegt ist, dass sie die vom Messwertgeber (36) erzeugten elektrischen Messwert-Signale so aufbereitet, dass sie als digitale, normierte, Messwertsignale über den ausgangsseitig mit ihr verbundenen Datenausgang (5) zur direkten Verarbeitung an standardisierte Rechner oder andere standardisierte Auswertgeräte (16, 8) abgebbar sind.

2. Messanordnung nach Anspruch 1, dadurch gekennzeichnet, dass die Elektronikschaltung (30) mit einer Anzeige- und Kontrolleinheit (70, 71, 72, 73) verbunden ist, die auf dem Längenmesstaster (10) befestigt ist und die die Messwertsignale in eine lesbare Anzeige umsetzt.

3. Messanordnung nach Anspruch 2, dadurch gekennzeichnet, dass die Anzeige- und Kontrolleinheit (70, 71, 72, 73) über eine am Zylinder (1, 1') vorhandene Kontaktzone (6) mit Kontaktbereichen (6'), die mit der Elektronikschaltung (30) verbunden sind, angeschliessbar ist.

4. Messanordnung nach Anspruch 1, dadurch gekennzeichnet, dass der Messbolzen (2) von einem dichten Faltenbalg (3) umgeben ist und der Datenausgang (5) des Längenmesstasters (10) über ein einziges Kabel (46) und einen einzigen Stecker (45) den elektrischen Anschluss des Längenmesstasters (10) an Auswerteinheiten (16) und den Anschluss an ein Druckmedium ermöglicht, mittels welchem Druckveränderungen im Zylinder (1, 1') erzeugbar sind.

5. Messanordnung nach Anspruch 1, dadurch gekennzeichnet, dass die Wirkkomponenten (41, 42, 44) des Messwertgebers koaxial mit der Längsachse (A-A) des Längenmesstasters (10) angeordnet sind.

6. Messanordnung nach Anspruch 5, dadurch gekennzeichnet, dass der Messwertgeber (36) ein kapazitives Messglied ist, dessen Gitterelektroden (44) eine äussere rohrförmige, mit der Längsachse (A-A) des Längenmesstasters (10) koaxiale Komponente darstellen, innerhalb welcher ein Schirm (41) als zweite rohrförmige, koaxiale Komponente angeordnet ist, innerhalb von welcher als dritte koaxiale Komponente eine Aufnehmerelektrode (42) liegt.

7. Messanordnung nach Anspruch 6, dadurch gekennzeichnet, dass der Schirm (41) mit dem Messbolzen (2) verbunden und mit diesem zusammen entlang der Längsachse (A-A) des Längenmesstasters (10) verschiebbar ist.

8. Messanordnung nach Anspruch 6, dadurch gekennzeichnet, dass die Gitterelektroden (44) aus einer aufgerollten, planar hergestellten flexiblen gedruckten Schaltung bestehen.

9. Messanordnung nach Anspruch 5, dadurch gekennzeichnet, dass zumindest einzelne Wirkkomponenten (41, 42, 44) schraubenförmig ausgebildet sind.

10. Messanordnung nach Anspruch 5, dadurch gekennzeichnet, dass der Schirm (41) aus einem flexiblen aufgerollten Material besteht.

11. Messanordnung nach Anspruch 5, dadurch gekennzeichnet, dass der Schirm (30) aus einem zylindrischen Rohr besteht, das mittels Laser, Aetzung oder Stanzung bearbeitet oder mittels Beschichtung eines rohrförmigen dielektrischen Materials hergestellt worden ist.

12. Messanordnung nach Anspruch 1, dadurch gekennzeichnet, dass der Messwertgeber (36) aus ebenen, nebeneinander angeordneten Wirkkomponenten besteht.

13. Messanordnung nach Anspruch 12, dadurch gekennzeichnet, dass zumindest einzelne Wirkkomponenten abgewinkelt sind.

14. Messanordnung nach Anspruch 12, dadurch gekennzeichnet, dass die Gitterelektroden (44) und zumindest ein Teil der Elektronikschaltung (30) auf einem gemeinsamen Substrat angeordnet sind.

15. Messanordnung nach Anspruch 12, dadurch gekennzeichnet, dass mindestens eine Aufnehmerelektrode und zumindest ein Teil der Elektronikschaltung auf einem gemeinsamen Substrat angeordnet sind.

## Claims

1. Measuring array comprising at least one linear electronic length measuring probe (10) with an outer cylinder (1,1'), an extendable and retractable spindle (2) with measuring tip (4) and an electronic circuit (30) connected to the transducer (36), said electronic circuit (30) being connectable to at least a readout display (12) and control means (14, 15), said cylinder (1,1') comprising a bearing sleeve (20,21,22) for the spindle (2), a linear transducer (36) generating measurement signals, and an electronic data output (5); characterised in that said electronic circuit (30) is contained within said cylinder (1,1') of said measuring probe (10) with normalized outer diameter and that said electronic circuit (30) converts electrical signals generated by said transducer (36) into standardized measuring signals in that way that said standardised measuring signals are fed through said data output (5) directly to a standardised input of a computer or to other standardised data processing means accepting standardised measuring signals.

2. The measuring array according to claim 1, caracterized in that said electronic circuit (30) is connected to display means and control means (70,71,72,73) converting the measuring signals into a readout display, said display means and control means (70,71,72,73) being fixed on said measuring probe (10).

3. The measuring array according to claim 2, caracterized in that said display and control means (70,71,72,73) is connected to said electronic circuit (30) via a contact zone (6) on said cylinder (1,1').

4. The measuring array according to claim 1, caracterized in that a gas tight bellow is arranged between said spindle (2) and said cylinder (1,1'), and that said data output (5) of said measuring probe (10) is connected to data processing means (16) via a cable (46) and a plug (45), said cable (46) and said plug (45) including means for connection to a pressure medium for effecting pressure changes within said cylinder (1,1').

5. The measuring array according to claim 1, caracterized in that active components (41,42,43) are coaxial with the longitudinal axis (A-A) of said measuring probe (10).

6. The measuring array according to claim 5, caracterized in that said transducer (36) is a capacitive measurement element wherein grid electrodes (44) form a tubular component coaxial with said longitudinal axis (A-A) of said linear measuring probe (10), within which a screen (41) is located as a second tubular coaxial component, within which a pickup electrode (42) lies as a third coaxial component.

7. The measuring array according to claim 6, caracterized in that said screen (41) is connected to said spindle (2) displacable together along said longitudinal axis (A-A) of said linear measuring probe (10).

8. The measuring array according to claim 6, caracterized in that said grid electrodes (44) consist of a rolled-up, flexible printed circuit which has been manufactured in planar fashion.

9. The measuring array according to claim 5, caracterized in that at least one of said active components (41,42,44) is helical.

10. The measuring array according to claim 5, caracterized in that said sreen (41) consists of a flexible, rolled-up material.

11. The measuring array according to claim 5, caracterized in that said screen (41) consists of a cylindrical tube which has been machined by a laser, an etching or punching process or manufactured by selective coating of a tubular, dielectric material.

12. The measuring array according to claim 1, caracterized in that said transducer (36) consists of planar active components located side by side.

13. The measuring array according to claim 12, caracterized in that at least port of said active components are dihedral.

14. The measuring array according to claim 12, caracterized in that said grid electrodes (44) and at least part of said electronic circuit (30) are located on a common substrate.

15. The measuring array according to claim 12, caracterized in that at least one pickup electrode and at least part of said electronic circuit are located on a common substrate.

## Revendications

1. Appareil de mesure comportant au moins un palpeur électronique linéaire de mesure de longueur (10) avec un cylindre extérieur (1,1'), une tige mobile (2) avec une touche (4), un circuit électronique (30) relié a un capteur (36) et pouvant être relié à au moins un affichage (12) et à des éléments de commande (14,15), ainsi que dans le cylindre (1,1') un guidage (20,21,22) pour la tige mobile (2), le capteur (36) pour l'élaboration du signal de mesure, et une sortie de données (5); caractérisé en ce que le circuit électronique (30) est disposé à l'intérieur du cylindre (1,1'), le diamètre exterieur du dit cylindre (1,1') étant normalisé, et que le dit circuit électronique (30) transforme les signaux électriques du capteur (36) en données digitales normalisées, reliées à la sortie de données (5), les dites données pouvant être acceptés directement à l'entrée standardisé d'un ordinateur ou autre équipement de traitement de données standardisé.

2. Appareil de mesure selon la revendication 1, caractérisé en ce que le circuit électronique (30) est relié à un dispositif d'affichage et de contrôle (70,71,72,73) fixé sur le palpeur (10), permettant la lecture des signaux de mesure.

3. Appareil de mesure selon la revendication 2, caractérisé en ce que le dispositif d'affichage et de contrôle (70,71,72,73) est relié au circuit électronique (30) par l'intermédiaire d'une zone de contacts (6) se trouvant sur le cylindre (1,1').

4. Appareil de mesure selon la revendication 1, caractérisé en ce qu'un joint étanche est placé entre la tige mobile (2) et le cylindre (1,1'), et que la sortie de données (5) du palpeur (10) est relié par une fiche (45) et un cable (46) à un équipemnt de traitement de données (16) et à une installation pouvant produire un changement de pression à l'intérieur du cylindre 1,1').

5. Appareil de mesure selon la revendication 1, caractérisé en ce que les composants actifs (41,42,43) sont disposés coaxialement selon l'axe longitudinal (A-A) du palpeur (10).

6. Appareil de mesure selon la revendication 5, caractérisé en ce que le capteur (36) est un élément capacitif composés d'électrodes émettrices (44) disposées coaxialement selon l'axe longitudinal (A-A) du palpeur (10), d'un écran (41) également disposé coaxialement et au centre une électrode réceptrice (42) également disposé coaxialement selon l'axe (A-A) du palpeur (10).

7. Appareil de mesure selon la revendication 6, caractérisé en ce que l'écran (41) est lié avec la tige mobile (2) et peut être déplacé le long de l'axe (A-A) du palpeur (10).

8. Appareil de mesure selon la revendication 6, caractérisé en ce que les électrodes émettrices (44) sont constituées d'un circuit imprimé flexible enroulé selon un cylindre.

9. Appareil de mesure selon la revendication 5, caractérisé en ce qu'au moins un des composants actifs (41,42,44) est disposé d'une facon hélicoidale.

10. Appareil de mesure selon la revendication 5, caractérisé en ce que l'écran (41) est constitué par un matériau flexible enroulé.

11. Appareil de mesure selon la revendication 5, caractérisé en ce que l'écran (41) est constitué d'un tube cylindrique, usiné par laser, par gravage chimique, par étampage, ou par déposition d'une couche sélective sur un support diélectrique.

12. Appareil de mesure selon la revendication 1, caractérisé en ce que les composants actifs du capteur (36) sont plan et disposés l'un à coté de l'autre.

13. Appareil de mesure selon la revendication 12, caractérisé en ce qu'au moins un des composants actifs est coudé.

14. Appareil de mesure selon la revendication 12, caractérisé en ce que les électrodes émettrices (44) et au moins une partie du circuit électronique (30) sont disposés sur un même substrat.

15. Appareil de mesure selon la revendication 12, caractérisé en ce qu'au moins une électrode réceptrice et au moins une partie du circuit électronique (30) sont disposés sur un même substrat.
